# DEMANDE DE BREVET EUROPEEN

(11) **EP 3 382 519 A1**
(43) Date de publication de la demande: **03.10.2018**
(21) Numéro de dépôt: 18163729.9
(22) Date de dépôt: 23.03.2018
(51) Int. Cl.: G06F 3/0481, H04M 1/725, H04M 19/04, H04M 11/08, H04L 29/08, H04W 4/00, H04W 4/18, G06F 3/0488, G06F 3/0484, G06F 3/048, H04W 4/50, H04W 4/38

(54) **SIGNALISATION DE LA QUALITÉ DE L'AIR SUR ÉCRAN D'ACCUEIL MOBILE**

(30) Priorité: 27.03.2017 FR 1752512
(71) Demandeur: Orange, 75015 Paris (FR)
(72) Inventeur: Pierre-Henri, Simon, 92326 Chatillon Cedex (FR)

(57) **Abrégé**

L'invention concerne un dispositif indicateur permanent de données, un procédé de gestion d'un dispositif indicateur permanent de données, un procédé d'adaptation d'un dispositif indicateur permanent de données, un procédé de mise en oeuvre d'un traitement par un terminal, un programme et un terminal l'utilisant. En particulier, le dispositif indicateur permanent est un pictogramme present en permanence sur un écran d'un terminal en mode actif.

Un objet de l'invention est un dispositif indicateur permanent d'une deuxième donnée par un terminal, le dispositif indicateur permanent étant apte, en outre, a constituer un dispositif indicateur permanent relatif a une premiere donnée distincte de la deuxième donnée, la premiere donnée étant fournie par un premier traitement mis en oeuvre par le terminal.

Ainsi, un même dispositif indicateur pourra informer en permanence l'utilisateur d'un terminal actif la valeur de donnée distincte, par exemple le pictogramme permanent de l'horloge pourra indiquer l'heure mais aussi le temps restant jusqu'a la prochaine alarme, la météo des prochaines 12 ou 24 heures, la qualité de I'air, etc. La gestion des dispositifs indicateurs permanents sera donc optimisée.

## Description

L'invention concerne un dispositif indicateur permanent de données, un procédé de gestion d'un dispositif indicateur permanent de données, un procédé d'adaptation d'un dispositif indicateur permanent de données, un procédé de mise en oeuvre d'un traitement par un terminal, un programme et un terminal l'utilisant. En particulier, le dispositif indicateur permanent est un pictogramme présent en permanence sur un écran d'un terminal en mode actif.

Les constructeurs de téléphones mobiles ont prévu, sur leurs terminaux, une barre de pictogrammes dans laquelle sont affichés des pictogrammes permanents correspondant à un nombre de paramètres limités du téléphone : horloge, batterie, réseau mobile, réseau Wifi, etc. Ces pictogrammes sont porteurs d'une seule donnée, l'heure pour l'horloge, puissance restante pour la batterie, qualité du réseau pour les réseaux mobile, Wifi...

Les terminaux, en particulier les smartphones et tablettes, mettant en oeuvre un nombre toujours plus importants d'applications. Certaines de ces applications sont des applications d'informations : météorologiques, qualité de l'air : pollution, pollens, transports, boursières, sécurité... ; des applications liées à des objets connectées : contrôle des ouvertures de la maison, de la gestion du jardin, des tâches ménagères... ; etc. L'utilisateur du smartphone éprouve quelque fois des difficultés à retrouver les données ou les applications qui lui sont importantes pour pouvoir les utiliser même si les widgets permettent un lien plus rapide ne nécessitant pas une ouverture de l'application.

Afin de permettre à l'utilisateur de retrouver une donnée provenant d'une application plus facilement, certaines applications utilisent la barre de pictogrammes pour afficher de manière un pictogramme relatif à une donnée provenant de l'application. Ces pictogrammes ne sont affichés que de manière occasionnelle car la barre de pictogramme est très limitée. Ainsi, le pictogramme sera utilisé généralement pour signaler un évènement ou une notification : message entrant, alarme programmée, fenêtre d'application ouverte, un fichier téléchargé, etc. L'utilisateur sait alors qu'une donnée est disponible, l'application dont elle provient (en fonction du pictogramme affiché) mais n'a aucune idée de sa valeur sauf s'il est à l'origine directe de la notification : notamment dans le cas de certains téléchargements, s'il n'a programmé qu'une seule alarme, etc.

Il pourrait être envisagé de faire porter une valeur d'une donnée par le pictogramme occasionnel comme les pictogrammes permanents de batterie ou de réseau qui utilise des barres avec deux niveaux de couleurs pour indiquer la puissance disponible relative respectivement au réseau, à la batterie. Ainsi, par exemple, un pictogramme d'alarme, indiquera le temps restant jusqu'au déclenchement de la prochaine alarme, une information de téléchargement le pourcentage de données téléchargées...

Un des buts de la présente invention est de remédier à des insuffisances de l'état de la technique par rapport à l'état de la technique.

Un objet de l'invention est un dispositif indicateur permanent d'une deuxième donnée implémenté par un terminal, le dispositif indicateur permanent étant apte, en outre, à constituer un dispositif indicateur permanent relatif à une première donnée distincte de la deuxième donnée, la première donnée étant fournie par un premier traitement mis en oeuvre par le terminal.

Ainsi, un même dispositif indicateur pourra informer en permanence l'utilisateur d'un terminal actif la valeur de donnée distincte, par exemple le pictogramme permanent de l'horloge pourra indiquer l'heure mais aussi le temps restant jusqu'à la prochaine alarme, la météo des prochaines 12 ou 24 heures, la qualité de l'air, etc.

Un objet de l'invention est aussi un procédé de gestion d'un dispositif indicateur permanent d'une deuxième donnée, le dispositif indicateur permanent étant implémenté par un terminal, le procédé de gestion d'un dispositif indicateur permanent comportant une adaptation du dispositif indicateur permanent de la deuxième donnée en fonction d'une première donnée distincte de la deuxième donnée, la première donnée étant fournie par un premier traitement mis en oeuvre par le terminal.

Ainsi, la gestion des dispositifs indicateurs permanents est optimisée permettant à un utilisateur d'y recevoir plus de données.

Un objet de l'invention est également un procédé d'adaptation d'un dispositif indicateur permanent d'une deuxième donnée, le dispositif indicateur permanent étant implémenté par un terminal, le procédé d'adaptation d'un dispositif indicateur comportant une modification du dispositif indicateur permanent en fonction d'une première donnée distincte de la deuxième donnée, la première donnée étant fournie par un premier traitement mis en oeuvre par le terminal.

Ainsi, le dispositif indicateur permanent est apte à informer un utilisateur sur plusieurs données dont au moins une donnée n'est pas relative directement au terminal mais à une application mise en oeuvre par le terminal. En outre, le dispositif indicateur permanent est apte à informer sur une variation de cette donnée.

Avantageusement, la modification du dispositif indicateur permanent comporte une modification d'un paramètre du dispositif indicateur permanent de la deuxième donnée en fonction d'une première donnée fournie par un premier traitement mis en oeuvre par le terminal.

Ainsi, le dispositif indicateur ne reproduira pas nécessairement ces deux données mais pourra indiquer par une forme, une couleur, etc. la valeur d'une l'une voire des deux données indiquées. Par exemple, la couleur indiquera la valeur de l'une des deux données : bleu pour une bonne qualité de l'air, blanche pour une qualité moyenne, gris pour une mauvaise qualité, et la forme indiquera l'heure.

Avantageusement, la deuxième donnée est fournie par un deuxième traitement mis en oeuvre par le terminal distinct du premier traitement.

Ainsi, l'invention permet que le dispositif indicateur porte :
- deux données d'un même traitement : un traitement domotique fournissant la météorologie de la maison et la position des ouvertures, ou
- deux données de traitement distinct : l'heure fournie par l'horloge et la qualité de l'air par une application de surveillance de la pollution.

Avantageusement, le procédé d'adaptation d'un dispositif indicateur permanent comporte une comparaison de la première donnée par rapport à au moins un seuil d'indication, le résultat de la comparaison contrôlant la modification d'un paramètre du dispositif indicateur permanent.

Ainsi, le dispositif indicateur peut fournir les données sous forme de barres (verticales, horizontales, etc.) représentant des proportions de la valeur des données ou des niveaux de valeurs plutôt qu'une représentation graduelle. Un tel dispositif indicateur par niveau sera plus facilement lisible et utilisable.

Avantageusement, la première donnée comporte au moins l'une des valeurs suivantes :
- une valeur d'une donnée fournie par le premier traitement,
- un résultat d'une comparaison d'une valeur d'une donnée fournie par le premier traitement à au moins un seuil d'indication.

Ainsi, lorsque le dispositif indicateur porte un résultat d'une comparaison de la première donnée, la comparaison peut être effectuée par le traitement ou la gestion d'un dispositif indicateur permanent permettant d'alléger la charge de calcul, respectivement, de la gestion d'un dispositif indicateur permanent ou du traitement.

Avantageusement, lorsque le dispositif indicateur permanent comporte une interface utilisateur de la deuxième donnée divisée en plusieurs parties, la modification d'un paramètre du dispositif indicateur permanent consiste au moins en l'une des modifications suivantes :
- modification d'un paramètre d'une seule des parties de l'interface utilisateur du dispositif indicateur permanent,
- modification de manière identique du même paramètre de plusieurs parties de l'interface utilisateur du dispositif indicateur permanent,
- modification de manière distincte du même paramètre de plusieurs parties de l'interface utilisateur du dispositif indicateur permanent,
- modification de paramètres distincts de plusieurs parties de l'interface utilisateur du dispositif indicateur permanent.

Ainsi, une même donnée peut être codée dans plusieurs paramètres sur le dispositif indicateur permettant d'éviter les erreurs de compréhension de la donnée fournie par le dispositif indicateur.

Avantageusement, le procédé d'adaptation d'un dispositif indicateur permanent comporte une sélection d'un paramètre du dispositif indicateur permanent parmi les paramètres du dispositif indicateur permanent en fonction du type de la première donnée, la modification sera effectuée sur le paramètre sélectionné en fonction d'une valeur de la première donnée.

Ainsi, le paramètre du dispositif indicateur permanent utilisé pour porter la première donnée n'est pas toujours le même. Ce paramètre peut être sélectionné aléatoirement par le dispositif indicateur permanent, ou en fonction d'une commande du premier traitement, ou par l'utilisateur du terminal.

Avantageusement, l'un des paramètres du dispositif indicateur permanent est un paramètre de forme d'un pictogramme.

Avantageusement, le paramètre modifié du dispositif indicateur permanent est au moins l'un des paramètres suivants :
- un paramètre de couleur ;
- un paramètre de forme ;
- un paramètre de dimension ;
- un paramètre de lien.

Un objet de l'invention est encore un procédé de mise en oeuvre d'un premier traitement par un terminal, le procédé de mise en oeuvre du premier traitement comportant une modification d'un dispositif indicateur permanent d'une deuxième donnée en fonction d'une première donnée distincte de la deuxième donnée, la première donnée étant fournie par un premier traitement mis en oeuvre par le terminal et le dispositif indicateur permanent étant implémenté par le terminal.

Avantageusement, selon une implémentation de l'invention, les différentes étapes d'un procédé selon l'invention sont mises en oeuvre par un logiciel ou programme d'ordinateur, ce logiciel comprenant des instructions logicielles destinées à être exécutées par un processeur de données d'un terminal et étant conçus pour commander l'exécution des différentes étapes de ce procédé.

L'invention vise donc aussi un programme comprenant des instructions de code de programme pour l'exécution des étapes du procédé de gestion d'un dispositif indicateur permanent, ou du procédé d'adaptation d'un dispositif indicateur ou du procédé de mise en oeuvre d'un premier traitement lorsque ledit programme est exécuté par un processeur.

Ce programme peut utiliser n'importe quel langage de programmation et être sous la forme de code source, code objet ou code intermédiaire entre code source et code objet tel que dans une forme partiellement compilée ou dans n'importe quelle autre forme souhaitable.

Un objet de l'invention est un terminal comportant :
- un dispositif indicateur permanent d'une deuxième donnée par un terminal, le dispositif indicateur permanent étant apte, en outre, à constituer un dispositif indicateur permanent relatif à une première donnée distincte de la deuxième donnée, et
- un processeur mettant en oeuvre un premier traitement fournissant la première donnée.

Les caractéristiques et avantages de l'invention apparaîtront plus clairement à la lecture de la description, faite à titre d'exemple, et des figures s'y rapportant qui représentent :
- Figure 1, un schéma simplifié d'un dispositif indicateur permanent selon l'invention,
- Figures 2a et 2b, des schémas simplifiés respectivement d'un procédé de gestion d'un dispositif indicateur permanent selon l'invention et d'un procédé de mise en oeuvre d'un premier traitement selon l'invention,
- Figure 3, un schéma simplifié d'un procédé d'adaptation d'un dispositif indicateur permanent selon l'invention,
- Figures 4a, 4b et 4c, des schémas simplifiés d'une interface d'un dispositif indicateur permanent selon l'invention, respectivement implémenté dans un terminal selon l'invention, d'exemples d'adaptation du dispositif indicateur permanent en fonction de la première donnée, d'exemples d'adaptation d'une partie du dispositif indicateur permanent en fonction de la première donnée,
- Figures 5a, 5b, 5c, 5d et 5e, des schémas simplifiés d'une interface d'un dispositif indicateur permanent en fonction de différentes valeurs de la deuxième donnée pour les figures 5a à 5c, et d'une (figure 5d) ou plusieurs premières données (figures 5e) fournies par un premier traitement et/ou le deuxième traitement fournissant la deuxième donnée, dont une au moins une donnée relative à la pollution de l'air.

Par dispositif indicateur permanent, aussi nommé indicateur permanent, est entendu un dispositif apte à indiquer une grandeur relative à une donnée.

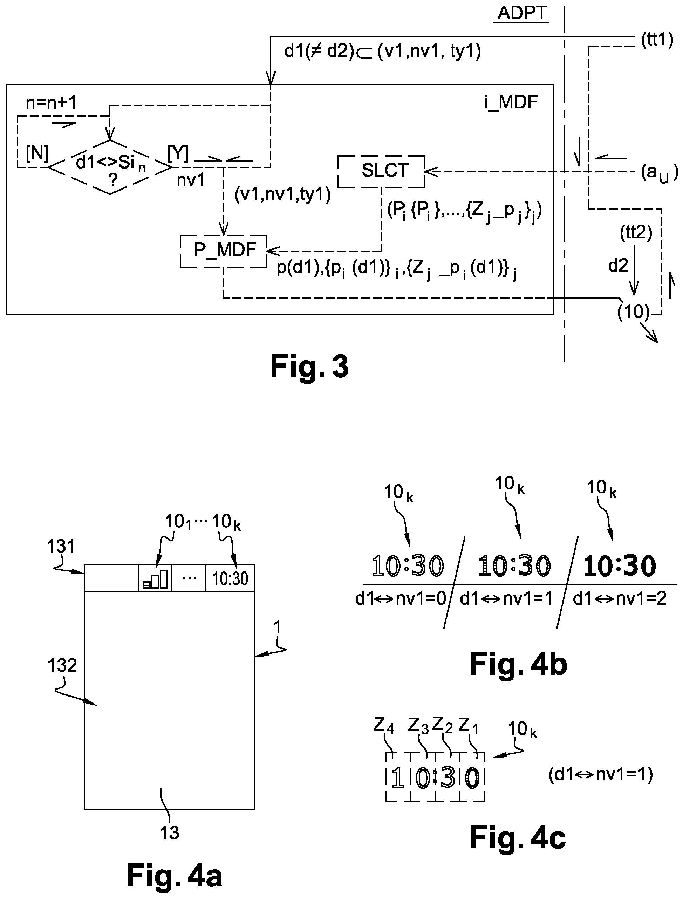

L'indicateur permanent est implémenté par le terminal, c'est-à-dire dans la barre d'états 131 du terminal comme illustré par la figure 4a ou sous la forme d'une icône sur l'écran d'accueil du terminal.

Les différents modes de réalisation présentés peuvent être mis en oeuvre séparément ou ensemble.

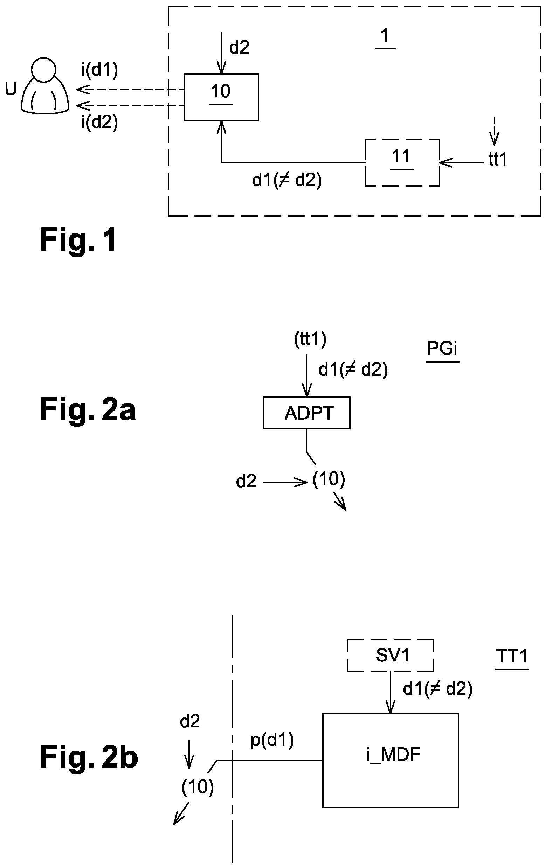

La figure 1 illustre un schéma simplifié d'un dispositif indicateur permanent, selon l'invention, d'une deuxième donnée sur un terminal.

Un dispositif indicateur permanent 10 d'une deuxième donnée d2 est un dispositif indicateur fournissant, dans au moins un mode du terminal 1, au moins une information relative à la deuxième donnée à un utilisateur U d'un terminal 1 implémentant le dispositif indicateur permanent de telle sorte que l'utilisateur U dispose à tout moment d'une information exacte relative à la deuxième donnée d2. Afin d'assurer cette permanence du dispositif indicateur 10, soit le dispositif indicateur permanent 10 fournit en continue l'information relative à la deuxième donnée d2, soit le dispositif indicateur permanent 10 fournit de manière répétée l'information relative à la deuxième donnée d2.

En outre, le dispositif indicateur permanent 10 fonctionne, notamment, uniquement lorsque le terminal 1 est en mode actif. Il peut aussi être envisagé que le dispositif indicateur permanent 10 fonctionne à la fois en mode actif et en mode veille.

La fourniture de l'information relative à la deuxième donnée d2 à un utilisateur U du terminal 1 est notamment effectuée par le dispositif indicateur permanent 10 par reproduction de cette information relative à la deuxième donnée d2, par transmission à l'utilisateur U d'un signal d'alerte fonction de la deuxième donnée d2, etc. Par exemple, le dispositif indicateur permanent 10 comporte une interface utilisateur U ou contrôle une interface utilisateur U d'un terminal 1 pour fournir une information à un utilisateur U du terminal 1.

Le dispositif indicateur permanent 10 est apte à constituer en outre un dispositif indicateur permanent relatif à une première donnée d1 distincte de la deuxième donnée d2. La première donnée d1 est fournie par un premier traitement tt1 mis en oeuvre par le terminal 1.

Ainsi, le même dispositif indicateur permanent 10 fournit en permanence des informations relatives à deux données distinctes d1 et d2, voire simultanément lorsque la fourniture est effectuée en continue.

La figure 1 montre un dispositif indicateur permanent 10 recevant à la fois une première donnée fournie par un premier traitement tt1 mis en oeuvre par un terminal 1 et une deuxième donnée, les premières et deuxièmes données étant distinctes. Le dispositif indicateur permanent 10 transmet en permanence des informations relatives à la première donnée i(d1) et à la deuxième donnée i(d2) à un utilisateur U du terminal 1.

L'utilisation d'un dispositif indicateur permanent plutôt qu'un dispositif indicateur supplémentaire pour fournir à l'utilisateur la première donnée favorise la permanence de la fourniture de la première donnée sans nécessité d'intervention de l'utilisateur.

Eventuellement, un terminal 1 comporte :
- un dispositif indicateur permanent 10 d'une deuxième donnée d2 par le terminal 1, le dispositif indicateur permanent 10 étant apte, en outre, à constituer un dispositif indicateur permanent relatif à une première donnée d1 distincte de la deuxième donnée d2, et
- un processeur 11 mettant en oeuvre un premier traitement tt1 fournissant la première donnée d1.

Dans un mode de réalisation particulier, le premier traitement tt1 est :
- soit un traitement générant la première donnée d1 ;
- soit un traitement d'accès à des données dont la première donnée d1, ces données étant soit stockées soit générées soit captées par le terminal 1 soit dans un dispositif de fourniture de données tel qu'un disque dur, une clé usb, un fournisseur de données dans un réseau de communication auquel le terminal 1 est connecté soit directement soit via un réseau de communication filaire ou sans fil, local ou distant, mobile ou fixe, etc.
- soit un traitement de réception de données dont la première donnée d1 provenant soit d'un ou plusieurs capteurs du terminal 1, d'un dispositif de capture ou d'un générateur de données auquel le terminal 1 est connecté soit directement soit via un réseau de communication filaire ou sans fil, local ou distant, mobile ou fixe, etc.

Dans un mode de réalisation particulier, la deuxième donnée est fournie soit directement par le terminal 1 (horloge, charge de la batterie, puissance d'un réseau...), soit par un capteur du terminal 1, soit par un deuxième traitement tt2 mis en oeuvre par le terminal 1.

Dans un mode de réalisation particulier, le deuxième traitement tt2 est :
- soit un traitement générant la deuxième donnée d2 ;
- soit un traitement d'accès à des données dont la deuxième donnée d2, ces données étant soit stockées soit générées soit captées par le terminal 1 soit dans un dispositif de fourniture de données tel qu'un disque dur, une clé usb, un fournisseur de données dans un réseau de communication auquel le terminal 1 est connecté soit directement soit via un réseau de communication filaire ou sans fil, local ou distant, mobile ou fixe, etc.
- soit un traitement de réception de données dont la deuxième donnée d2 provenant soit d'un ou plusieurs capteurs du terminal 1, d'un dispositif de capture ou d'un générateur de données auquel le terminal 1 est connecté soit directement soit via un réseau de communication filaire ou sans fil, local ou distant, mobile ou fixe, etc.

Ainsi, l'invention permet d'utiliser, voire de surcharger, un dispositif indicateur permanent, notamment son interface proposant un pictogramme permanent, d'un terminal, notamment d'un téléphone mobile pour véhiculer une donnée supplémentaire, par exemple sur la qualité de l'air.

En particulier, Le dispositif indicateur permanent d'une deuxième donnée implémenté dans une barre d'états d'un terminal. Le dispositif indicateur permanent implémenté dans la barre d'états du terminal est apte, en outre, à constituer un dispositif indicateur permanent relatif à une première donnée distincte de la deuxième donnée, la première donnée étant fournie par un premier traitement mis en oeuvre par le terminal.

Par barre d'états (« status bar » en anglais) est entendue notamment une barre d'affichage (par exemple en haut de l'écran du terminal) fournissant des données notamment des données système et/ou de connectivité du terminal tel que l'heure, le niveau de charge de la batterie du terminal, la puissance du signal de transmission du terminal...

La figure 2a illustre un schéma simplifié d'un procédé de gestion d'un dispositif indicateur permanent selon l'invention.

Le procédé de gestion d'un dispositif indicateur permanent d'une deuxième donnée PGI comporte une adaptation ADPT du dispositif indicateur permanent de la deuxième donnée 10 en fonction d'une première donnée d1 distincte de la deuxième donnée d2. La première donnée d1 est fournie par un premier traitement tt1 mis en oeuvre par le terminal 1.

Une adaptation ADPT mise en oeuvre par le procédé de gestion d'un dispositif indicateur permanent PGI de la figure 2a est notamment illustrée par la figure 3.

Dans un mode de réalisation particulier, le procédé de gestion d'un dispositif indicateur permanent est mis en oeuvre par un programme comprenant des instructions de code de programme pour l'exécution des étapes du procédé de gestion d'un dispositif indicateur permanent lorsque ledit programme est exécuté par un processeur.

En particulier, le procédé de gestion comporte outre l'adaptation d'autres traitements tel que le paramétrage de la position de Le dispositif indicateur permanent notamment par choix de l'utilisateur ou de manière automatique pour optimiser par exemple la zone d'affichage des dispositif indicateurs permanents.

La figure 2b illustre un schéma simplifié d'un procédé de mise en oeuvre d'un premier traitement selon l'invention.

Le procédé de mise en oeuvre du premier traitement TT1 comporte une modification I_MDF d'un dispositif indicateur permanent 10 d'une deuxième donnée en fonction d'une première donnée distincte d1 de la deuxième donnée d2. La première donnée d1 est fournie par un premier traitement TT1 mis en oeuvre par le terminal. Le dispositif indicateur permanent 10 étant implémenté par le terminal 1.

Une modification I_MDF d'un dispositif indicateur permanent d'une deuxième donnée mise en oeuvre par le procédé de mise en oeuvre du premier traitement TT1 de la figure 2b est notamment illustrée par la figure 3.

Le premier traitement TT1 comporte, en particulier, une mise en oeuvre d'un service SV1 fournissant la première donnée. La mise en oeuvre du service SV1 est par exemple, une capture de données, et/ou un accès à des données stockées dans le terminal, dans un dispositif de fourniture de donnée, et/ou une génération de données, etc.

Dans un mode de réalisation particulier, le procédé de gestion d'un dispositif indicateur permanent est mis en oeuvre par un programme comprenant des instructions de code de programme pour l'exécution des étapes du procédé de mise en oeuvre d'un premier traitement lorsque ledit programme est exécuté par un processeur.

Eventuellement, le procédé de mise en oeuvre du premier traitement peut fournir d'autre(s) information(s) que la valeur de la donnée utilisée pour modifier l'dispositif indicateur. Par exemple, un premier traitement tel qu'une application météo peut en outre permettre d'accéder à d'autres données que celle apportée par Le dispositif indicateur permanent : météo d'autres lieux, d'autres moments (jour, heures), d'autres données météorologiques : pluviométrie, vitesse du vent... lorsque l'application météo est ouverte.

La figure 3 illustre un schéma simplifié d'un procédé d'adaptation d'un dispositif indicateur permanent selon l'invention.

Le procédé d'adaptation d'un dispositif indicateur permanent d'une deuxième donnée ADPT comporte une modification I_MDF du dispositif indicateur permanent 10 en fonction d'une première donnée d1 distincte de la deuxième donnée d2. La première donnée d1 est fournie par un premier traitement tt1 mis en oeuvre par un terminal 1.

En particulier, la modification I_MDF du dispositif indicateur permanent comporte une modification d'un paramètre P_MDF du dispositif indicateur permanent de la deuxième donnée en fonction d'une première donnée d1 fournie par un premier traitement tt1 mis en oeuvre par le terminal 1.

En particulier, la deuxième donnée d2 est fournie par un deuxième traitement tt2 mis en oeuvre par le terminal 1. Le deuxième traitement tt2 est, notamment, distinct du premier traitement tt1.

En particulier, le procédé d'adaptation d'un dispositif indicateur permanent ADPT comporte une comparaison *d1<>Sln ?* de la première donnée d1 par rapport à au moins un seuil d'indication Sln, le résultat de la comparaison nv1 contrôlant la modification d'un paramètre du dispositif indicateur permanent P_MDF. Notamment, la modification d'un dispositif indicateur permanent I_MDF comporte cette comparaison *d1<>Sln ?.*

En particulier, la première donnée d1 comporte au moins l'une des valeurs suivantes :
- une valeur v1 d'une donnée fournie par le premier traitement tt1,
- un résultat d'une comparaison nv1 d'une valeur d'une donnée fournie par le premier traitement tt1 à au moins un seuil d'indication.
En outre, la première donnée d1 comporte notamment une dénomination relative à la donnée ty1 : son nom, son type...

En particulier, lorsque le dispositif indicateur permanent 10 comporte une interface utilisateur de la deuxième donnée divisée en plusieurs parties Zj, la modification d'un paramètre P MDF du dispositif indicateur permanent consiste au moins en l'une des modifications suivantes :
- modification d'un paramètre d'une seule des parties de l'interface utilisateur du dispositif indicateur permanent Zj_pi(d1),
- modification de manière identique du même paramètre de plusieurs parties de l'interface utilisateur du dispositif indicateur permanent {Zj_pi(d1)=f(d1)}j,
- modification de manière distincte du même paramètre de plusieurs parties de l'interface utilisateur du dispositif indicateur permanent {Zj_pi(d1)=fj(d1)}j,
- modification de paramètres distincts de plusieurs parties de l'interface utilisateur du dispositif indicateur permanent {Zj_pi(d1)=fij(d1)}ij.

En particulier, le procédé d'adaptation ADPT d'un dispositif indicateur permanent comporte une sélection SLCT d'un paramètre p du dispositif indicateur permanent 10 parmi les paramètres du dispositif indicateur permanent notamment en fonction du type de la première donnée ty1. La modification P_MDF sera effectuée sur le paramètre sélectionné p(d1) en fonction d'une valeur de la première donnée.

En particulier, l'un des paramètres du dispositif indicateur permanent est un paramètre de forme d'un pictogramme. Ainsi, l'interface utilisateur lorsqu'il s'agit d'un écran ou d'une interface d'affichage recevra en fonction de la deuxième donnée un signal comportant un paramètre de forme d'un pictogramme permettant de transmettre à l'utilisateur au moins le type de la deuxième donnée : un pictogramme horloge pour une alarme, une pile pour une information de charge, des arcs de cercle formant un cône pour représenter la puissance d'un réseau, voir en outre une valeur de la deuxième donnée : affichage de l'heure (ce qui correspond à la fois au type de donnée : horloge et à la valeur de la donnée), etc.

En particulier, dans le cas où l'interface utilisateur est une interface d'affichage, ou dans le cas où l'un des paramètres est un paramètre de forme d'un pictogramme, le paramètre modifié par la première donnée d1 du dispositif indicateur permanent 10 est au moins l'un des paramètres suivants :
- un paramètre de couleur ;
- un paramètre de forme ;
- un paramètre de dimension ;
- un paramètre de lien.

Le paramètre de lien, permet notamment, lorsque l'utilisateur interagit avec le dispositif indicateur permanent que le dispositif indicateur permanent active l'accès, par le terminal, à une adresse stockée dans le paramètre de lien. Ainsi, l'utilisateur peut avoir accès à des données complémentaires à la première donnée fournit par le dispositif indicateur permanent et/ou à un paramétrage de la modification du dispositif indicateur permanent par le premier traitement : sélection d'une première donnée parmi des données fournies par le premier traitement et/ou sélection du ou des paramètres du dispositif indicateur permanent fonction de la première donnée et/ou établissement de règles d'association de valeur de la première donnée avec une valeur d'un paramètre du dispositif indicateur permanent.

L'interface utilisateur peut aussi être une interface haptique, c'est-à-dire avec retour de force, ou une interface vocale, etc. Les paramètres sont alors notamment :la puissance du retour de force, la direction du retour de force, le bouton ou la manette à laquelle le retour de force est associé ; la puissance vocale, la tonalité, le son ou le mot, l'expression vocalisée...

Dans le cas d'une interface vocale, le dispositif indicateur permanent fournira les deux données pas nécessairement en continue mais au moins de manière répétée éventuellement simultanément.

Un programme comprenant des instructions de code de programme pour l'exécution des étapes d'un procédé d'adaptation d'un dispositif indicateur lorsque ledit programme est exécuté par un processeur.

Les figures 4a, 4b et 4c illustrent des schémas simplifiés d'une interface d'un dispositif indicateur permanent selon l'invention.

La figure 4a illustre une interface d'un terminal selon l'invention implémentant au moins un dispositif indicateur permanent.

Le terminal 1 comporte notamment une interface utilisateur 13 constituée en l'occurrence par un écran tactile. Afin que l'utilisateur U soit toujours informé de certaines données, l'interface utilisateur 13 est divisée en deux parties : une barre d'indicateurs permanents 131 (notamment une barre d'états) et un écran libre 132. Sur l'écran libre 132, l'utilisateur peut éventuellement choisir son fond d'écran et/ou ajouter des icônes correspondantes aux applications qu'ils utilisent. Sur la barre d'indicateurs permanents 131, le terminal 1 affiche systématiquement et à tout moment au moins dans un mode actif du terminal des données telles que la puissance du réseau 10₁ ... l'heure 10_{K}. La barre d'indicateurs permanents 131 correspond donc aux interfaces utilisateurs 10₁... 10_{K} de K dispositifs indicateurs permanents du terminal 1. Ces dispositifs indicateurs permanents sont généralement imposés par le constructeur du terminal 1, éventuellement par certains traitements disponibles sur le terminal 1.

La figure 4b montre des exemples d'adaptation d'un dispositif indicateur permanent, notamment implémenté par le terminal de la figure 4a, en fonction de différentes valeurs de la première donnée.

Par exemple, l'interface utilisateur du dispositif indicateur permanent de l'heure 10K peut être utilisé pour fournir à l'utilisateur U une première donnée d1 distincte de la deuxième donnée d2 que constitue l'heure.

Dans l'exemple de la figure 4b, le paramètre de la couleur d'affichage du dispositif indicateur permanent est fonction de la première donnée d1. En particulier, lorsque, suite à une comparaison par rapport à au moins deux seuils, le dispositif indicateur permanent détermine que le niveau de la première donnée nv1 est :
- nul nv1=0, le paramètre de la couleur d'affichage de l'heure n'est pas modifié, par exemple il est égal à une couleur blanche ou claire (bleu pâle) ou une première teinte (tel que vert) ;
- égal à 1 nv1=1, le paramètre de la couleur d'affichage de l'heure est modifié, par exemple il est légèrement foncé pour devenir notamment une couleur de teinte moyenne notamment grisée (bleu moyen) ou une deuxième teinte (tel que jaune) ;
- égal à 2 nv1=2, le paramètre de la couleur d'affichage de l'heure est modifié, par exemple il est fortement foncé pour devenir une couleur de teinte foncée (bleu marine) notamment une couleur noire (ou gris foncé perceptible sur un fond noir) ou une troisième teinte (tel que rouge).

La figure 4c montre un exemple d'adaptation d'une partie d'une interface utilisateur d'un dispositif indicateur permanent, notamment implémenté par le terminal de la figure 4a, en fonction d'une valeur de la première donnée.

Dans notre exemple, l'interface utilisateur du dispositif indicateur permanent de l'horloge 10_{K} est décomposée en quatre parties Z1, Z2, Z3 et Z4. En fonction de la première donnée, un paramètre d'une ou plusieurs voire la totalité des quatre parties de Z1, Z2, Z3 et Z4 de l'interface utilisateur du dispositif indicateur permanent de l'horloge 10_{K} est modifiée. La figure 4c montre le cas où le niveau de valeur de la première donnée est égale à 1 modifiant uniquement le paramètre de couleur de la première zone Z1 de l'interface utilisateur du dispositif indicateur permanent de l'horloge 10_{K}.

Dans le cas où le niveau de valeur de la première donnée serait égale à 2, il pourrait être envisagé que le procédé d'adaptation selon l'invention modifie le paramètre de couleur soit uniquement de la deuxième zone Z2 soit des deux premières zones Z1 et Z2 de l'interface utilisateur du dispositif indicateur permanent de l'horloge 10_{K}. Ce raisonnement pouvant être reproduit pour un niveau de valeur égale à 3 et à 4.

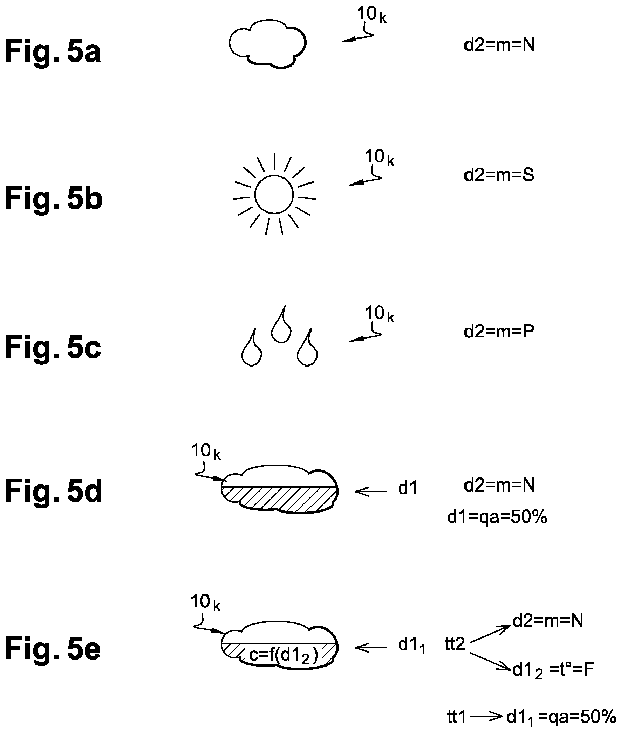

Les figures 5a, 5b, 5c, 5d et 5^{e} illustrent des schémas simplifiés d'une interface d'un dispositif indicateur permanent.

Les figures 5a à 5c montrent une interface d'un dispositif indicateur permanent 10k d'une deuxième donnée d2 pour différentes valeurs d'une deuxième donnée d2=N, S, P, en l'occurrence la deuxième donnée est une donnée météorologique d2=m.

La figure 5a montre l'interface du dispositif indicateur permanent 10k d'une donnée météorologique d2=m pour laquelle la valeur est nuageux N. Le dispositif indicateur permanent 10k associe à la valeur nuageux N un paramètre de forme de type nuage comme présenté par la figure 5a.

La figure 5b montre l'interface du dispositif indicateur permanent 10k d'une donnée météorologique d2=m pour laquelle la valeur est ensoleillé S. Le dispositif indicateur permanent 10k associe à la valeur ensoleillée S un paramètre de forme de type soleil comme présenté par la figure 5b.

La figure 5c montre l'interface du dispositif indicateur permanent 10k d'une donnée météorologique d2=m pour laquelle la valeur est pluvieux P. Le dispositif indicateur permanent 10k associe à la valeur pluvieux P un paramètre de forme de type gouttes de pluie comme présenté par la figure 5c.

La figure 5d montre une interface d'un dispositif indicateur permanent d'une deuxième donnée adapté en fonction d'une première donnée relative à la pollution de l'air.

La deuxième donnée d2 est une donnée météorologique m fournie soit par une application météorologique du terminal 1, soit par des capteurs du terminal 1. Dans cet exemple, la valeur de la deuxième donnée est nuageux N. Le paramètre de forme de l'interface du dispositif indicateur permanent de la deuxième donnée est fonction de cette deuxième donnée et présente donc une forme de nuage.

La première donnée d1 est une donnée de qualité de l'air qa fournie soit par des capteurs du terminal 1 soit par une application relative à la pollution mise en oeuvre par le terminal 1. La qualité de l'air qa dans notre exemple est de 50%, c'est-à-dire correspondant à une qualité moyenne de l'air relativement à des valeurs de qualité de l'air identifiées comme bonne et mauvaise.

Le dispositif indicateur permanent 10k modifie au moins un paramètre de son interface en fonction de la première donnée d1. En l'occurrence, un premier paramètre permet de diviser la forme correspondant à la deuxième donnée, c'est-à-dire le nuage, en deux parties dont la dimension de l'une est fonction de la valeur de la première donnée. En l'occurrence, la forme est divisée en deux parties dont la partie basse est égale à 50% de la dimension de la forme, c'est-à-dire la même valeur que la qualité de l'air fournit par la première donnée. Eventuellement, un deuxième paramètre est modifié en fonction de la première donnée, par exemple le paramètre de la couleur correspondant à la partie dont la dimension est fonction de la première donnée.

La figure 5e montre une interface d'un dispositif indicateur permanent d'une deuxième donnée adapté en fonction de plusieurs premières données fournies par un premier traitement et un deuxième traitement fournissant la deuxième donnée

Une deuxième application de météorologie fournie la deuxième donnée d2 est une donnée météorologique m fournie. Dans cet exemple, la valeur de la deuxième donnée est nuageux N. Le paramètre de forme de l'interface du dispositif indicateur permanent de la deuxième donnée est fonction de cette deuxième donnée et présente donc une forme de nuage.

La qualité de l'air est une donnée importante et régulièrement mise à disposition du public via différentes média : télévision, radio, y compris à travers certaines applications dédiées. Pour disposer de cette donnée sur son téléphone mobile, il faut actuellement aller sur un site dédié, personnalisée un alerte. L'utilisateur doit donc rechercher l'information pour l'obtenir.

Une première donnée d1₁ est une donnée de qualité de l'air qa fournie par un premier traitement tt1 : soit par des capteurs du terminal 1 soit par une application relative à la pollution mise en oeuvre par le terminal 1. La qualité de l'air qa dans notre exemple est de 50%, c'est-à-dire correspondant à une qualité moyenne de l'air relativement à des valeurs de qualité de l'air identifiées comme bonne et mauvaise.

Le dispositif indicateur permanent 10k modifie au moins un paramètre de son interface en fonction de la première donnée d₁₁. En l'occurrence, un premier paramètre permet de diviser la forme correspondant à la deuxième donnée, c'est-à-dire le nuage, en deux parties dont la dimension de l'une est fonction de la valeur de la première donnée. En l'occurrence, la forme est divisée en deux parties dont la partie basse est égale à 50% de la dimension de la forme, c'est-à-dire la même valeur que la qualité de l'air fournit par la première donnée d₁₁.

Une autre première donnée d₁₂ peut aussi être fournie soit par le premier traitement soir par le deuxième traitement comme illustré par la figure 5e. Dans l'exemple de la figure 5e, le deuxième traitement tt2, c'est-à-dire l'application météorologique fournie une deuxième donnée d2: une donnée météorologique m et une première donnée d₁₂ : une donnée de température t°. Un paramètre de l'interface du dispositif indicateur permanent de météorologie 10k est modifié en fonction de la première donnée de température d₁₂=t°. En particulier, la valeur de la température t° est comparée à des seuils pour déterminer des niveaux de températures : gelée G, froide F, douce D, tempérée, chaude H, caniculaire C, etc. Sur la figure 5e, le niveau de la température t° est froide F. Par exemple, le paramètre de la couleur correspondant à la partie dont la dimension est fonction de la première donnée d11 est modifié en fonction de l'autre deuxième donnée d12 : c=f(d₁₂). Dans notre exemple, la couleur est bleue pour un niveau de température froide F. Il pourrait être envisagée d'attribuer, une couleur blanche pour gelée, bleu pour froide, verte pour douce, jaune pour tempérée, orange pour chaude et rouge pour caniculaire.

L'invention s'applique à des terminaux notamment des terminaux mobiles. Elle permet de rendre permanente la fourniture à l'utilisateur d'une première donnée quand elle existe. Suivant le type de première donnée, le terminal, un autre dispositif ou l'utilisateur peut en tirer des conséquences pour son comportement. Dans le cas de première donnée de type qualité de l'air, le dispositif indicateur permanent peut permettre une commande domotique des ouvertures d'un domicile, d'un mode de conduite d'un véhicule, des activités d'un utilisateur ayant éventuellement un bénéfice en matière de santé publique.

Dans le cas où un paramètre lien est modifié en fonction d'une première donnée correspondant à la qualité de l'air, le dispositif indicateur permanent permet à l'utilisateur d'accéder par exemple à des parcours qualifiés en fonction de la qualité de l'air : parcours vert pour le moins polluer ou pour un parcours avec une bonne qualité de l'air permettant à l'utilisateur et/ou une application de navigation de proposer un trajet véhiculé ou sportif en fonction de la qualité de l'air des options de trajets possibles.

L'invention vise aussi un support. Le support d'information peut être n'importe quelle entité ou dispositif capable de stocker le programme. Par exemple, le support peut comporter un moyen de stockage, tel qu'une ROM, par exemple un CD ROM ou une ROM de circuit microélectronique ou encore un moyen d'enregistrement magnétique, par exemple une disquette ou un disque dur.

D'autre part, le support d'information peut être un support transmissible tel qu'un signal électrique ou optique qui peut être acheminé via un câble électrique ou optique, par radio ou par d'autres moyens. Le programme selon l'invention peut être en particulier téléchargé sur un réseau notamment de type Internet.

Alternativement, le support d'information peut être un circuit intégré dans lequel le programme est incorporé, le circuit étant adapté pour exécuter ou pour être utilisé dans l'exécution du procédé en question.

Dans une autre implémentation, l'invention est mise en oeuvre au moyen de composants logiciels et/ou matériels. Dans cette optique le terme module peut correspondre aussi bien à un composant logiciel ou à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonction selon la description ci-dessous. Un composant matériel correspond à tout élément d'un ensemble matériel (ou hardware) apte à mettre en oeuvre une fonction ou un ensemble de fonctions.

## Revendications

1. Dispositif indicateur permanent d'une deuxième donnée implémenté par un terminal, le dispositif indicateur permanent étant apte, en outre, à constituer un dispositif indicateur permanent relatif à une première donnée distincte de la deuxième donnée, la première donnée étant fournie par un premier traitement mis en oeuvre par le terminal.

2. Procédé de gestion d'un dispositif indicateur permanent d'une deuxième donnée, le dispositif indicateur permanent étant implémenté par un terminal, le procédé de gestion d'un dispositif indicateur permanent comportant une adaptation du dispositif indicateur permanent de la deuxième donnée en fonction d'une première donnée distincte de la deuxième donnée, la première donnée étant fournie par un premier traitement mis en oeuvre par le terminal.

3. Procédé d'adaptation d'un dispositif indicateur permanent d'une deuxième donnée, le dispositif indicateur permanent étant implémenté par un terminal, le procédé d'adaptation d'un dispositif indicateur comportant une modification du dispositif indicateur permanent en fonction d'une première donnée distincte de la deuxième donnée, la première donnée étant fournie par un premier traitement mis en oeuvre par le terminal.

4. Procédé d'adaptation d'un dispositif indicateur permanent selon la revendication précédente, **caractérisé en ce que** la modification du dispositif indicateur permanent comporte une modification d'un paramètre du dispositif indicateur permanent de la deuxième donnée en fonction d'une première donnée fournie par un premier traitement mis en oeuvre par le terminal.

5. Procédé d'adaptation d'un dispositif indicateur permanent selon l'une quelconque des revendications 3 ou 4, **caractérisé en ce que** la deuxième donnée est fournie par un deuxième traitement mis en oeuvre par le terminal distinct du premier traitement.

6. Procédé d'adaptation d'un dispositif indicateur permanent selon l'une quelconque des revendications 3 à 5, **caractérisé en ce que** le procédé d'adaptation d'un dispositif indicateur permanent comporte une comparaison de la première donnée par rapport à au moins un seuil d'indication, le résultat de la comparaison contrôlant la modification d'un paramètre du dispositif indicateur permanent.

7. Procédé d'adaptation d'un dispositif indicateur permanent selon l'une quelconque des revendications 3 à 6, **caractérisé en ce que** la première donnée comporte au moins l'une des valeurs suivantes :
• une valeur d'une donnée fournie par le premier traitement,
• un résultat d'une comparaison d'une valeur d'une donnée fournie par le premier traitement à au moins un seuil d'indication.

8. Procédé d'adaptation d'un dispositif indicateur permanent selon l'une quelconque des revendications 3 à 7, **caractérisé en ce que**, lorsque le dispositif indicateur permanent comporte une interface utilisateur de la deuxième donnée divisée en plusieurs parties, la modification d'un paramètre du dispositif indicateur permanent consiste au moins en l'une des modifications suivantes :
• modification d'un paramètre d'une seule des parties de l'interface utilisateur du dispositif indicateur permanent,
• modification de manière identique du même paramètre de plusieurs parties de l'interface utilisateur du dispositif indicateur permanent,
• modification de manière distincte du même paramètre de plusieurs parties de l'interface utilisateur du dispositif indicateur permanent,
• modification de paramètres distincts de plusieurs parties de l'interface utilisateur du dispositif indicateur permanent.

9. Procédé d'adaptation d'un dispositif indicateur permanent selon l'une quelconque des revendications 3 à 8, **caractérisé en ce que** le procédé d'adaptation d'un dispositif indicateur permanent comporte une sélection d'un paramètre du dispositif indicateur permanent parmi les paramètres du dispositif indicateur permanent en fonction du type de la première donnée, la modification sera effectué sur le paramètre sélectionné en fonction d'une valeur de la première donnée.

10. Procédé d'adaptation d'un dispositif indicateur permanent selon l'une quelconque des revendications 3 à 9, **caractérisé en ce que** l'un des paramètres du dispositif indicateur permanent est un paramètre de forme d'un pictogramme.

11. Procédé d'adaptation d'un dispositif indicateur permanent selon la revendication précédente, **caractérisé en ce que** le paramètre modifié du dispositif indicateur permanent est au moins l'un des paramètres suivants :
• un paramètre de couleur ;
• un paramètre de forme ;
• un paramètre de dimension ;
• un paramètre de lien.

12. Procédé de mise en oeuvre d'un premier traitement par un terminal, le procédé de mise en oeuvre du premier traitement comportant une modification d'un dispositif indicateur permanent d'une deuxième donnée en fonction d'une première donnée distincte de la deuxième donnée, la première donnée étant fournie par un premier traitement mis en oeuvre par le terminal et le dispositif indicateur permanent étant implémenté par le terminal.

13. Programme comprenant des instructions de code de programme pour l'exécution des étapes du procédé de gestion d'un dispositif indicateur permanent selon la revendication 2, ou d'un procédé d'adaptation d'un dispositif indicateur selon l'une quelconque des revendications 3 à 10 ou du procédé de mise en oeuvre d'un premier traitement selon la revendication précédente lorsque ledit programme est exécuté par un processeur.

14. Terminal comportant :
• un dispositif indicateur permanent d'une deuxième donnée par le terminal, le dispositif indicateur permanent étant apte, en outre, à constituer un dispositif indicateur permanent relatif à une première donnée distincte de la deuxième donnée, et
• un processeur mettant en oeuvre un premier traitement fournissant la première donnée.
